# EUROPEAN PATENT SPECIFICATION

(11) **EP 0 916 091 B1**
(45) Date of publication and mention of the grant of the patent: **29.10.2003**
(21) Application number: 97934506.3
(22) Date of filing: 21.07.1997
(51) Int. Cl.: G01N 31/22, C07D 487/22, G01N 21/76, G01N 21/64

(54) **LIGHT-SENSITIVE COMPOSITIONS FOR OXYGEN OPTRODES**
LICHTEMPFINDLICHE ZUSAMMENSETZUNGEN FÜR SAUERSTOFFOPTRODEN
COMPOSITIONS SENSIBLES A LA LUMIERE POUR MATERIAUX SERVANT A DETECTER LA PRESENCE D'OXYGENE

(30) Priority: 22.07.1996 CH 183096
(43) Date of publication of application: 19.05.1999
(73) Proprietor: Novartis AG, 4056 Basel (CH)
(72) Inventor: SINGER, Eris, D-79541 Lörrach (DE); BERGER, Joseph, CH-4057 Basel (CH)
(74) Representative: Dannappel, Hans-Jochen, Dr.
(86) International application number: EP9703914
(87) International publication number: WO98003865

(56) References cited:
- US-A- 5 155 149
- D.B. PAPKOVSKY ET AL.: "Phosphorescent polymer films for optical oxygen sensors" BIOSENSORS AND ELECTRONICS, vol. 7, no. 3, 1991, OXFORD UK, pages 199-206, XP002047662 cited in the application
- E. SINGER ET AL.: "Fiber optic sensor for oxygen determination in liquids" SENSORS AND ACTUATORS A, vol. 42, no. 1-3, 1994, LAUSANNE CH, pages 542-546, XP000449978 cited in the application
- H.Y. LIU ET AL.: "Oxygen permeability of sol-gel coatings." APPLIED SPECTROSCOPY, vol. 46, no. 7, 1 July 1992, WASHINGTON DC USA, pages 1266-1272, XP002047751 cited in the application

## Description

The present invention relates to a composition comprising solvent, certain oxygen-permeable and membrane-forming polymers and a luminophore; to a support to which there is applied a layer comprising a certain oxygen-permeable and membrane-forming polymer and a luminophore; and to a method for the optical determination of oxygen.

The quantitative determination of oxygen in gases and liquids by means of luminescence-optical methods and optrodes has recently become more important, especially in the field of diagnostics for the determination of the oxygen content in body fluids, for example blood.

In Biosensors & Bioelectronics 7 (1991), pages 199 to 206, D. B. Papkovsky *et al*. describe a fibre optic oxygen sensor having a polystyrene membrane in which platinum porphyrins are dissolved as fluorescence indicators. The luminescence produced by means of excitation radiation is extinguished, or reduced, by "quenching", in contact with oxygen, the extent of that extinction or reduction depending upon the amount of oxygen in the membrane. Thus, after calibration, the content of oxygen in an analyte sample can be measured by way of the decrease in the luminescence. A disadvantage of that system is a poor adhesion of the membrane to the support material. Moreover, the literature does not indicate whether it is possible, using fibre optic sensors and measurements in the evanescent field, to obtain a linear dependency of the concentration of oxygen upon the quotient I₀/I (I₀ is luminescence in the absence of oxygen; I is luminescence in the presence of oxygen).

In Applied Spectroscopy 46(8) (1992), pages 1266 to 1272, H.-Y Liu *et al*. mention platinum octaethylporphyrin as a fluorescence indicator in sol/gel-based membranes (polysiloxanes) for fibre optic sensors that are distinguished by a high permeability to oxygen. In some cases, a linear dependency of the quotient I₀/I upon the oxygen content is found (correlation coefficient maximum only 0.996), which is obtained, *inter alia*, by the specific selection of organic groups on the silicon atoms. Disadvantages of those sol/gel membranes are the decay behaviour of the excited phosphorescence indicator that is dissolved in the membranes, which can be described satisfactorily only by using a bi-exponential function, and the measuring sensitivity which, in some membranes, is associated with too sparing solubility of the luminophore in the polymer. Moreover, the optrodes are complicated to produce, which does not permit economic production on an industrial scale.

US-A-5 155 149 describes fibre optic oxygen sensors in which the active layer consists of a copolymer having siloxane and urethane blocks, in which a platinum (tetraaminophenyl)porphyrin is bonded as fluorophore. It is mentioned that the permeability and solubility of oxygen can be influenced by the selection of the siloxane and urethane components. The covalent bonding of the fluorophore ensures its uniform distribution in the membrane. Functionalised fluorophores are difficult to produce and are therefore expensive, with the result that economic industrial mass production is not possible.

In Sensors and Actuators A, 41-42 (1994), pages 542 to 546, E. Singer *et al*. describe fibre optic optrodes for the detection of oxygen, the active layer of which consists of acrylate and methacrylate copolymers or cellulose acetate in combination with ruthenium(II) tris(4,7-diphenyl-1,10-phenanthrolin)perchlorate. The calibrating curves are non-linear, as a result of which a relatively large number of measuring points is necessary in the calibration in order to obtain precise measurements of the oxygen content of a measurement sample, which is felt to be too complicated.

In Anal. Chem. 67 (1995), pages 88 to 93, P. Hartmann discloses planar optrodes comprising a glass or polyester support, to which there is applied a thin active layer of polystyrene that contains ruthenium(II) tris(4,7-diphenyl-1,10-phenanthrolin)perchlorate as fluorescence indicator. Those optrodes likewise do not demonstrate the desired ideal linear dependency of the quotient I₀/I upon the partial pressure of the oxygen in the measurement sample, as is required in accordance with the Stern-Vollmer equation I₀/I = 1 +K*[O₂] for homogeneous solutions, wherein I is the luminescence in the presence of oxygen, I₀ is the luminescence in the absence of oxygen and K* is the quenching constant.

In practice, it has proved advantageous to supplement the measured luminescence intensities, or rather the photoelectric voltages corresponding to them, in the Stern-Volmer equation by a constant C. Using the constant C, any possible background radiation, which may stem, for example, from reflections or scattering of the excitation light, or dark current effects are taken into account.

There is a great need for optrodes for the detection of oxygen with which the calibration can be effected rapidly and in an uncomplicated manner using few, ideally two, measurements in a wide range of the O₂ partial pressure, for example from above 0 to 840 torr. The response times should be in the range of no longer than 40 seconds and it should be possible to regenerate the system rapidly and reuse it for new measurements with virtually no loss in measuring precision (identical luminescence intensities at identical concentrations of oxygen throughout the period of use) being able to occur, thus ensuring a long usable life. It is also important that virtually no decomposition or other change occurs during storage. To ensure sufficient sensitivity, it is also advantageous for the quenching constant for the overall system in diagnostic methods (blood analysis) to be so adjusted that K is in the range of from 1 to 35 times 10⁻³ torr⁻¹, preferably from 3 to 30 times 10⁻³ torr⁻¹, especially from 5 to 25 times 10⁻³ torr⁻¹.

The obtained sensitivity (K) depends upon the duration of the excited state of the luminescence indicator in the absence of oxygen and upon the permeability of the polymer membrane to oxygen (product of the oxygen solubility and the diffusion coefficient of oxygen in the polymer membrane). The mentioned parameters influence the probability with which the luminescence of an excited indicator molecule will be extinguished by oxygen. In the case of relatively short durations, polymers having relatively high permeability to oxygen will therefore be selected in order to obtain the preferred sensitivity, and *vice versa.* The adjustment can be determined by the person skilled in the art by simple measurements based on the Stern-Vollmer equation.

It has now, surprisingly, been found that those high requirements can be fulfilled by combining platinum porphyrins as luminescence indicators with selected copolymers.

The invention relates firstly to a composition comprising (a) an effective amount of a luminophore, (b) an oxygen-permeable and film-forming polymer and (c) a solvent for components (a) and (b), wherein
(a1) the luminophore is selected from the group of platinum(II) porphyrins; and
(a2) the polymers are selected from the group:
(1) polystyrene-acrylonitriles having from 5 to 95 mol % structural units of acrylonitrile and from 95 to 5 mol % structural units of styrene; and
(2) a hydrophobic homopolymer of an acrylate, methacrylate, acrylamide or methacrylamide, or a hydrophobic copolymer based on a monomer from the group acrylate, methacrylate, acrylamide and methacrylamide, and an olefinic comonomer.

Hydrophobic polyacrylamides generally contain 1 or 2 hydrocarbon radicals, especially alkyl groups having preferably from 1 to 20 carbon atoms, the total number of carbon atoms determining their hydrophobic property. Also included in the scope of the invention are copolymers having at least two monomers from the group acrylate, methacrylate, acrylamide and methacrylamide. The acrylates and methacrylates are preferably those having a linear or branched C₁-C₂₀alkyl group in the ester group. The copolymers of component 2 contain preferably at least 5 mol %, especially at least 10 mol %, more especially at least 20 mol % and very especially at least 40 mol % of an olefinic comonomer.

Suitable comonomers are, for example, olefins, for example ethene, propene and butene, vinyl ethers, vinyl esters, vinyl acetals, vinyl chloride, vinylidene chloride, vinyl fluoride, acrylonitrile, methacrylonitrile and styrene.

A preferred sub-group of copolymers of component 2 comprises those selected from the group:
(a) a polymethacrylate or polyacrylate having from 95 to 70 mol % structural units of methyl methacrylate or methyl acrylate and from 5 to 30 mol % structural units of an acrylate or methacrylate having in the ester group an alkyl group that contains at least 3 carbon atoms;
(b) a terpolymer having from 40 to 60 mol % structural units of methyl methacrylate or methyl acrylate, from 5 to 30 mol % structural units of an acrylate or methacrylate having in the ester group an alkyl group that contains at least 6 carbon atoms, and 55 at least 10 mol % structural units of acrylonitrile wherein the total of the mol % is always 100 %; and
(c) a copolymer having from 30 to 45 mol % structural units of methyl methacrylate or methyl acrylate, from 20 to 5 mol % structural units of an acrylate or methacrylate having in the ester group an alkyl group that contains at least 6 carbon atoms, from 20 to 30 mol % structural units of acrylonitrile, and from 30 to 15 mol % structural units of vinyl acetate.

The total of the mol % is always 100 mol %.

The polymers used in the composition according to the invention are known or can be prepared in accordance with known processes by means of polymerisation of the monomers that form the basis of the structural units.

The polystyrene-acrylonitriles (1) contain preferably from 15 to 85, especially from 20 to 70, more especially from 25 to 55 and very especially from 30 to 45 mol % structural units of acrylonitrile, the remainder of the structural units being of styrene.

In the copolymers having structural units of an acrylate or methacrylate, the alkyl group of the ester group, provided it is not the methyl methacrylate or methyl acrylate itself, contains preferably from 2 to 18, especially from 3 to 14, more especially from 3 to 12 and very especially from 4 to 12 carbon atoms. The alkyl may be linear or branched. Examples thereof are n-butyl, isobutyl, n-pentyl, n-hexyl, 2-ethylbutyl, n-heptyl, 2- or 3-methylhexyl, 2-or 3-ethylpentyl, n-octyl, 2-ethylhexyl, nonyl, decyl, undecyl, dodecyl, tridecyl, tetradecyl, pentadecyl, hexadecyl, heptadecyl and octadecyl, n-Butyl and 2-ethylhexyl are especially preferred.

The polymethacrylates or polyacrylates (a) contain preferably from 10 to 25 and especially from 10 to 20 mol % structural units of an acrylate or methacrylate having an alkyl group that contains at least 4 carbon atoms, the remainder of the structural units being of methyl methacrylate or methyl acrylate.

The terpolymers (b) contain preferably from 40 to 50 mol % structural units of methyl methacrylate or methyl acrylate, from 10 to 25 mol % structural units of an acrylate or methacrylate having in the ester group an alkyl group that contains at least 6 carbon atoms, and from 50 to 25 mol % structural units of acrylonitrile.

The copolymer (c) contains preferably from 35 to 45 mol % structural units of methyl methacrylate, from 5 to 15 mol % structural units of an acrylate having in the ester group an alkyl group that contains at least 6 carbon atoms, from 30 to 20 mol % structural units of acrylonitrile, and from 30 to 20 mol % structural units of vinyl acetate.

The molecular weight of the polymers may be, for example, from 10 000 to 5 000 000, preferably from 20 000 to 3 000 000, especially from 20 000 to 2 000 000 and more especially from 30 000 to 2 000 000 daltons. Better strengths of adhesion to the support material are often obtained with higher molecular weights.

The compositions according to the invention can be prepared by dissolving components a) and b) in a solvent, where appropriate with heating. By means of the concentration and nature of the polymer, its molecular weight and the choice of solvent, the viscosity of the composition can be so adjusted that the desired layer thickness is achieved in the preparation of optrodes.

Platinum porphyrins are known or can be prepared in accordance with known methods. They may be, for example, unsubstituted or substituted platinum(II) porphyrins or unsubstituted or substituted platinum(II) benzoporphyrins. They may correspond, for example, to formula I, 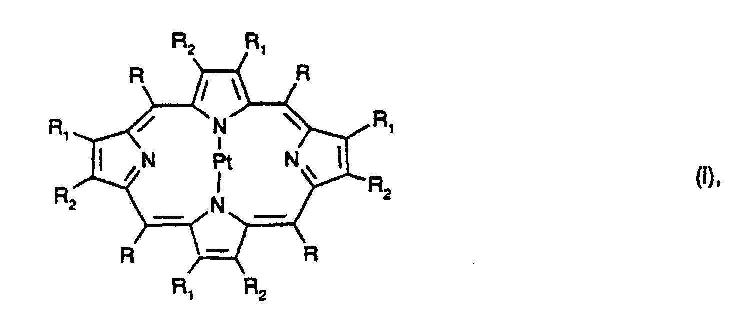 wherein
R is H or C₁-C₁₈alkyl, or C₃-C₈cycloalkyl, phenyl, pyridyl or phenyl-C₁-C₄alkylene, each of which is unsubstituted or substituted by C₁-C₁₈alkyl, C₁-C₁₈alkoxy, R₃-O-C(O)-, halogen, -CN or by -NO₂;
R₁ and R₂ are each independently of the other H, C₁-C₁₂alkyl or C₁-C₁₂alkoxy, or R₁ and R₂ together form -CH₂CHR₄CHR₅CH₂-, -OCH₂O-, -OCH₂CH₂O- or -CH=CH-CH=CH-;
R₃ is C₁-C₁₈alkyl, C₃-C₈cycloalkyl, phenyl, benzyl, C₁-C₁₂alkylphenyl or C₁-C₁₂alkylbenzyl; and
R₄ and R₅ are each independently of the other H, C₁-C₁₂alkyl or C₁-C₁₂alkoxy;
with the proviso that when R₁ and R₂ together form -CH₂CHR₄CHR₅CH₂-, R is not substituted or unsubstituted phenyl or pyridyl.

It is mentioned by way of explanation that the excluded compounds are not luminescent.

The substituents in the cyclic radicals of R, for example cyclohexyl or phenyl, may be bonded in the 2-, 3- or 4-position. The radicals are preferably monosubstituted, with the substituent being bonded especially in the 4-position.

When R in formula I is alkyl, it is preferably linear or branched C₁-C₁₂-, especially C₁-C₈- and more especially C₁-C₄-alkyl. Examples thereof are methyl, ethyl and the isomers of propyl, butyl, pentyl, hexyl, heptyl, octyl, nonyl, decyl, undecyl, dodecyl, tridecyl, tetradecyl, pentadecyl, hexadecyl, heptadecyl and octadecyl. Linear alkyl is also preferred.

When R in formula I is cycloalkyl, it is preferably C₄-C₇cycloalkyl, especially C₅- or C₆-cycloalkyl. Examples thereof are cyclopropyl, cyclobutyl, cyclopentyl, cyclohexyl, cycloheptyl and cyclooctyl.

When R in formula I is phenylalkyl, it is preferably benzyl or 1-phenyleth-2-yl.

In a preferred sub-group, R in formula I is H or is phenyl that is unsubstituted or substituted by C₁-C₁₈alkyl, C₁-C₁₈alkoxy, R₃-O-C(O)-, halogen, -CN or by -NO₂, and R₁ and R₂ together form -CH=CH-CH=CH-;
R₃ being C₁-C₁₈alkyl, C₃-C₈cycloalkyl, phenyl, benzyl, C₁-C₁₂alkylphenyl or C₁-C₁₂alkylbenzyl.

R₃ is preferably C₁-C₁₂alkyl, especially C₁-C₆alkyl, it being possible for the alkyl to be linear or branched.

R₁ and R₂ as alkyl and alkoxy may be linear or branched and are preferably C₁-C₈alkyl or C₁-C₈alkoxy, more preferably C₁-C₆alkyl or C₁-C₆alkoxy and especially C₁-C₄alkyl or C₁-C₄alkoxy. Examples thereof are methyl, ethyl, n-propyl and isopropyl, n-butyl, isobutyl and t-butyl, pentyl, hexyl, methoxy, ethoxy, n-propoxy and isopropoxy, n-butoxy, isobutoxy and t-butoxy, pentoxy and hexoxy.

An especially preferred sub-group of the compounds of formula I comprises those wherein R is H, phenyl or C₁-C₄alkylphenyl, and each of R₁ and R₂ is H, C₁-C₈alkyl or -CH=CH-CH=CH-.

Another especially preferred sub-group of the compounds of formula I comprises those wherein R is H or C₁-C₈alkyl, and R₁ and R₂ together form -CH₂CHR₄CHR₅CH₂- wherein each of R₄ and R₅ is H or C₁-C₄alkyl.

Examples of platinum(II) porphyrins are platinum(II) tetrabenzoporphyrin, platinum(II) tetraphenyltetrabenzoporphyrin, platinum(II) octaethylporphyrin and platinum(II) cyclohexenoporphyrin.

Platinum(II) porphyrins are known or can be prepared in accordance with analogous processes, for example by reaction of PtCl₂ with the corresponding porphyrins in, for example, benzonitrile as solvent at elevated temperatures. The platinum(II) cyclohexenoporphyrins so obtainable can be dehydrogenated to the corresponding platinum(II) benzoporphyrins using organic dehydrogenating agents, for example chloranil or dichlorodicyanobenzoquinone in a solvent. The porphyrins themselves are known and can be converted in accordance with analogous methods, for example starting from isoindolines or isoindoline derivatives 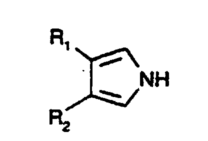 and aldehydes R-CHO,
to form a compound of the formula 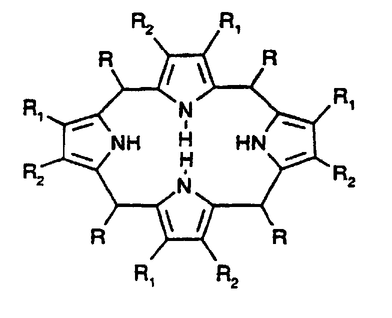 wherein R₁, R₂ and R are as defined for formula I, and those compounds are then dehydrogenated in a known manner using dehydrogenating agents, for example chloranil, dichlorodicyanobenzoquinone, or catalytically using noble metal catalysts, to the porphyrins of formula II

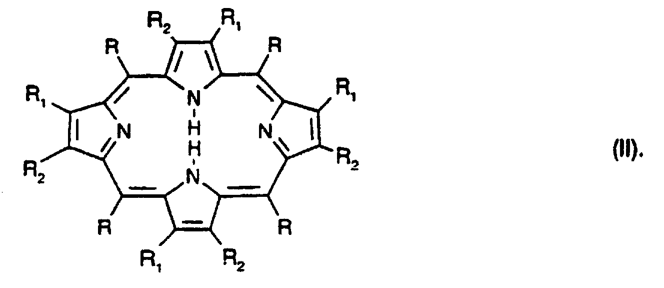

The composition according to the invention comprises an organic solvent or mixtures of such solvents comprising at least two different solvents. The solvents are preferably dipolar and aprotic. Examples of solvents are ethers (diethyl ether, dipropyl ether, dibutyl ether, ethylene glycol dimethyl or diethyl ether, diethylene glycol dimethyl ether, tetrahydrofuran and dioxane), N-dialkylated acid amides or N-alkylated lactams (dimethylformamide, dimethylacetamide, N-methylpyrrolidone, N-methylcaprolactam), sulfones and sulfoxides (tetramethylene sulfone and tetramethylene sulfoxide), esters and lactones (methyl acetate, octyl acetate, butyrolactone, caprolactone, valerolactone), nitriles (acetonitrile, butyronitrile, benzonitrile, benzylnitrile), hydrocarbons (benzene, toluene, xylene), halogenated hydrocarbons (methylene chloride, chloroform, carbon tetrachloride, 1,1,1-trichloroethane, 1,1,2,2-tetrachloroethane, chlorobenzene) and ketones (acetone, methyl ethyl ketone, methyl isopropyl ketone).

Suitable solvents have been mentioned hereinabove. The choice of solvents is guided essentially by the solubility properties of the polymers and luminophores.

"Effective amount" means a concentration of compound of formula I that is sufficient to detect the extinction of luminescence on contact with oxygen. The concentration of compound of formula I can be, for example, from 0.01 to 20 % by weight, preferably from 0.1 to 10 % by weight, especially from 0.5 to 5 % by weight and more especially from 0.5 to 3 % by weight, based on the amount of components a) and b).

The invention relates also to a composition comprising
a) a solid support material, to which there is applied an active layer of
b) a composition according to the invention.

The support materials may be transparent, translucent or opaque materials, with transparent materials being preferred. Examples of materials are plastics, glasses, minerals, metal and semi-metal oxides, metal nitrides and metal and semi-metal carbides. Preferred support materials are inorganic glasses and plastics.

The surfaces of the support materials may be activated in order to improve the adhesion, for example by means of a plasma treatment, or adhesion promoters may be bonded to the surface. There may also be an adhesion-promoting layer between the surface and the active layer.

The surface area of the support material can be in the range of, for example, mm² to cm², preferably from 1 mm² to 10 cm², especially from 2 mm² to 5 cm², more especially from 5 mm² to 5 cm². In order to carry out multiple measurements there may be arranged on the support several, for example from 2 to 30, preferably from 2 to 20, polymer layers that are separate from one another and have been produced by means of screen printing or writing processes. For the sensors, the glass wafers may be cut into strips. The sensor area effectively used can be, for example, from 0.8 to 20 mm².

The layer thickness of the composition comprising polymer and compound of formula I can be, for example, from 0.5 to 1000 µm, preferably from 0.5 to 200 µm, especially from 0.5 to 50 µm and more especially from 0.5 to 5 µm.

The concentration of compound of formula I can be, for example, from 0.01 to 20 % by weight, preferably from 0.1 to 10 % by weight, especially from 0.5 to 5 % by weight and more especially from 0.5 to 3 % by weight, based on the amount of components a) and b).

The composition according to the invention can be prepared in accordance with known coating processes, for example spreading, knife application, pouring, writing, for example curtain pouring process or especially spin-casting.

The composition according to the invention is excellently suitable for the detection of oxygen when the active layer is in contact with an analyte, which may be gaseous or liquid. The composition is especially suitable for human-and animal diagnostics.

The invention relates also to a method of determining oxygen in an analyte, in which an oxygen-sensitive layer of an optical sensor, which layer contains a luminescence indicator and an oxygen-permeable polymer, is irradiated with light and luminescence radiation is produced, then the analyte is brought into contact with the layer and the reduction in the intensity of the luminescence radiation in dependence upon the oxygen content is detected,
wherein the oxygen-sensitive layer comprises
(a1) a luminophore selected from the group of platinum(II) porphyrins; which is uniformly distributed in
(a2) a copolymer selected from the group:
   (1) polystyrene-acrylonitriles having from 5 to 95 mol % structural units of acrylonitrile and from 95 to 5 mol % structural units of styrene; and
   (2) a hydrophobic homopolymer of an acrylate, methacrylate, acrylamide or methacrylamide, or a hydrophobic copolymer based on a monomer from the group acrylate, methacrylate, acrylamide and methacrylamide, and an olefinic comonomer.

The preferences and preferred forms indicated hereinabove for the two compositions apply also to the method according to the invention.

Suitable radiation sources for exciting the luminescence are, for example, UV lamps (halogen and xenon lamps), light-emitting diodes, lasers and diode lasers. It may be advantageous to select, by means of filters, light of the wavelength at which the luminescence dye has an absorption maximum. The excitation radiation can fall on the surface of the optrode perpendicularly or obliquely.

The luminescence light emitted by the sensors can be collected, for example using a lens system, and then fed to a detector. There may be used as detectors photoelectron multipliers or photodiodes. The lens system may be so arranged that the luminescence radiation is measured through a transparent support. Advantageously, the radiation is deflected *via* a dichroic mirror and, by means of filters, light of the wavelength at which the luminescence dye has an emission maximum is selected. The measurements are advantageously carried out during contact with the calibrating solutions or sample solutions or gas samples. For quantitative measurements, the sensors are calibrated using samples having a known oxygen content. The measurements can be carried out in fluorescence spectrometers which are commercially available.

The oxygen detection can be carried out discontinuously in individual cells or continuously in flow-through systems; using the stop/flow method, it is possible to carry out a measurement several times or to measure different analytes in succession. Parallel measurements are also possible if multi-channel systems are used.

The measuring temperature of the analytes can vary and, depending on the analyte medium, can be, for example, from -20°C to 200°C, preferably from 0 to 100°C and especially from 10 to 50°C. It is therefore possible without difficulty to take measurements in the physiological temperature range of approximately 37°C without damaging the optrodes.

The measuring arrangement and the measuring conditions may influence the sensitivity, which, if desired, can be determined by the person skilled in the art by simple measurements.

The invention relates also to the use of a composition comprising (a) an effective amount of a luminophore selected from the group of platinum(II) porphyrins and (b) an oxygen-permeable film-forming copolymer selected from the group:
(1) polystyrene-acrylonitriles having from 5 to 95 mol % structural units of acrylonitrile and from 95 to 5 mol % structural units of styrene; and
(2) a hydrophobic homopolymer of an acrylate, methacrylate, acrylamide or methacrylamide, or a hydrophobic copolymer based on a monomer from the group acrylate, methacrylate, acrylamide and methacrylamide, and an olefinic comonomer;
as the active layer of a sensor (optrode) for the luminescence-optical determination of oxygen.

The preferences and forms indicated hereinabove for the composition according to the invention apply also to that use.

The Examples which follow illustrate the invention in greater detail.

### A) Preparation of platinum(II) tetracyclohexenoporphyrin

### Example A1: Preparation of platinum(II) cyclohexenoporphyrin

A mixture of 1.0 g (1.9 mmol) of tetracyclohexenoporphyrin, 2 g of Cl₂Pt(C₆H₅CN)₂ (4.2 mmol) and 200 ml of freshly distilled benzonitrile is heated under reflux, with stirring, for 2 hours. The mixture is then left to stand at room temperature overnight, and the precipitate that forms is filtered off. Drying is carried out overnight *in vacuo* at 100°C and 1.27 g (92 %) of a dark-red microcrystalline powder are obtained.
Absorption spectrum in CHCl₃, λₘₐₓ(ε): 380 (266400), 501 (11000) and 536 (54900).
¹H-NMR (500 MHz, CHCl₃): 9.86 (4H, s, broad); 4.10 (16H, s, broad) and 2.50 (16H, s).
- Phosphorescence quantum yields:: Φ₀ (in degassed CHCl₃): 0.421
Φ (in air-saturated CHCl₃): 0.0011.

### B) Preparation of coating compositions

### Examples B1 to B10:

a) Preparation process for Examples B1-B5: First, an approximately 0.1 % saturated solution of platinum(II) octaethylporphyrin in chloroform is prepared. 100 mg of styrene-acrylonitrile copolymer are then dissolved in 2 g of the dye solution (approximately 5 % polymer). The concentration of dye is approximately 2 % by weight, based on the polymer.
b) Preparation process for Examples B6 to B10: 5 % by weight (based on the solution) of copolymer is dissolved in a dimethylacetamide solution saturated with platinum(II) octaethylporphyrin.

**Table 1:**

| Composition of the styrene-acrylonitrile copolymers | | |
|---|---|---|
| Example | Styrene (mol %) | Acrylonitrile (mol %) |
| B1 | 91.7 | 8.3 |
| B2 | 79.7 | 20.3 |
| B3 | 71.6 | 28.4 |
| B4 | 66.2 | 33.8 |
| B5 | 58.5 | 41.5 |
| B6 | 43.8 | 56.2 |
| B7 | 37.2 | 62.8 |
| B8 | 26.7 | 73.3 |
| B9 | 18.0 | 82.0 |
| B10 | 6.8 | 93.2 |

### Example B11:

200 mg of copolymer of 91.7 mol % styrene and 8.3 mol % acrylonitrile and 1 mg of platinum(II) tetrabenzoporphyrin are dissolved in 2 g of tetrahydrofuran.

### Example B12:

A saturated solution of platinum(II) tetracyclohexenoporphyrin in chloroform is prepared. 50 mg of copolymer of 58.5 mol % styrene and 41.5 mol % acrylonitrile are dissolved in 2 g of that solution.

### Example B13:

First, an approximately 0.1 % solution of platinum(II) tetraphenyltetrabenzoporphyrin in chloroform is prepared. 100 mg of copolymer of 79.7 mol % styrene and 20.3 mol % acrylonitrile are then dissolved in 2 g of that dye solution (approximately 5 % polymer). The concentration of dye is approximately 2 % by weight, based on the polymer.

### Examples B14 to B19:

First, an approximately 0.1 % solution of platinum(II) octaethylporphyrin in chloroform is prepared. 100 mg of copolymer according to Table 2 are then dissolved in 2 g of that dye solution (approximately 5 % polymer). The concentration of dye is approximately 2 % by weight, based on the polymer.

**Table 2:**

| Composition of the methacrylate copolymers corresponding to the monomer proportions used for the polymerisation. | | | |
|---|---|---|---|
| Ex. | Methyl methacrylate (mol %) | 2-Ethylhexyl methacrylate (mol %) | n-Butyl methacrylate (mol %) |
| B14 | 95 | 5 | |
| B15 | 90 | 10 | |
| B16 | 85 | 15 | |
| B17 | 80 | 20 | |
| B18 | 95 | | 5 |
| B19 | 90 | | 10 |

### Example B20:

First, an approximately 0.1 % solution of platinum(II) tetraphenyltetrabenzoporphyrin in chloroform is prepared. 100 mg of copolymer of 85 mol % methyl methacrylate and 15 mol % 2-ethylhexyl methacrylate are dissolved in 2 g of that dye solution (approximately 5 % polymer). The concentration of dye is approximately 2 % by weight, based on the polymer.

### Examples B21 to B24:

First, a saturated solution of platinum(II) octaethylporphyrin in tetrahydrofuran is prepared. 220 mg of copolymer according to Table 3 are then dissolved in 2 g of that dye solution (10 % polymer).

**Table 3:**

| Composition of the methacrylate copolymers corresponding to the monomer proportions used for the polymerisation. | | | |
|---|---|---|---|
| Example | Methyl methacrylate (mol %) | Acrylonitrile (mol %) | 2-Ethylhexyl acrylate (mol %) |
| B21 | 45 | 50 | 5 |
| B22 | 45 | 45 | 10 |
| B23 | 45 | 40 | 15 |
| B24 | 45 | 35 | 20 |

### Example B25:

First, a saturated solution of platinum(II) tetracyclohexenoporphyrin in chloroform is prepared. 50 mg of copolymer of 45 mol % methyl methacrylate, 10 mol % 2-ethylhexyl acrylate and 45 mol % acrylonitrile are then dissolved in 2 g of that dye solution (2.5 % polymer).

### Example B26:

First, a 0.1 % solution of platinum(II) tetraphenyltetrabenzoporphyrin in chloroform is prepared. 100 mg of copolymer of 45 mol % methyl methacrytate, 20 mol % 2-ethylhexyl acrylate and 35 mol % acrylonitrile are then dissolved in 2 g of that dye solution (approximately 5 % polymer). The concentration of dye is approximately 2 % by weight, based on the polymer.

### Example B27:

First, a saturated solution of platinum(II) octaethylporphyrin in tetrahydrofuran is prepared. 10 % by weight of copolymer of 40 mol % methyl methacrylate, 15 mol % 2-ethylhexyl acrylate, 25 mol % acrylonitrile and 20 mol % vinyl acetate are then dissolved in 2 g of that dye solution. The concentration of dye is approximately 1 % by weight, based on the polymer.

### Example B28:

First, a saturated solution of platinum(II) octaethylporphyrin in tetrahydrofuran is prepared. 10 % by weight of copolymer of 40 mol % methyl methacrylate, 10 mol % 2-ethylhexyl acrylate, 25 mol % acrylonitrile and 25 mol % vinyl acetate are then dissolved in 2 g of that dye solution. The concentration of dye is approximately 1 % by weight, based on the polymer.

### C) Preparation of sensors

### Example C1:

150 µl of a solution according to Examples B1 to B10, B12, B14 to B19, B21 to B24, B27 and B28 are applied, under a solvent atmosphere, to a 2.5 cm²-sized silanised glass plate by spin-casting at from 3000 to 6000 (usually 3500) revolutions/minute, and then the solvent is removed in a nitrogen stream at elevated temperature (80°C, at least 2 hours). The layer thicknesses are from 0.5 to 5 µm.
In the case of the polymer solutions according to Examples B6 to B10, pre-drying is carried out immediately after application of the polymer solution in order to prevent the high-boiling solution from contracting on the glass plate.

### Example C2:

1 ml of a solution according to Examples B11, B13, B20 and B26 is applied, under a solvent atmosphere, to a 36 cm²-sized silanised glass plate by spin-casting at from 6000 to 9000 revolutions/minute, and the solvent is then removed in a nitrogen stream at elevated temperature (80°C, at least 2 hours). The layer thicknesses are from 0.5 to 5 µm. In the case of the polymer solution according to Example 26, the solution is additionally diluted with chloroform to lower the viscosity.

### F) Application Examples

### Example F1: Calibrations

The support is so arranged that the excitation radiation falls on the active layer at an oblique angle. The radiation source used is a green light-emitting diode with the interposition of a shortpass interference filter (KIF, Schott-Schleifer AG) that has a maximum transmission (λₘₐₓ) at a wavelength of 533.5 nm and 50% transmission (λ_{Kant}) at a wavelength of 566.5 nm. A 645 DF 20 band filter (G+P Electronic AG) is used as the emission filter. The phosphorescence radiation is measured using a photodiode having an amplification of 10¹¹. Moreover, the photoelectric voltage is reduced by means of a voltage distributor to such an extent that the photoelectric voltage obtained for an oxygen-free measurement sample is less than 1 volt.

There is used as measurement sample a sodium chloride-containing phosphate buffer [PBS, ionic strength 0.1 M (NaCl)], which, in each case, in the range from 0 to 840 torr has an oxygen content in 10 % steps. The measurement samples and also the entire measuring apparatus are brought to a temperature of 37°C.

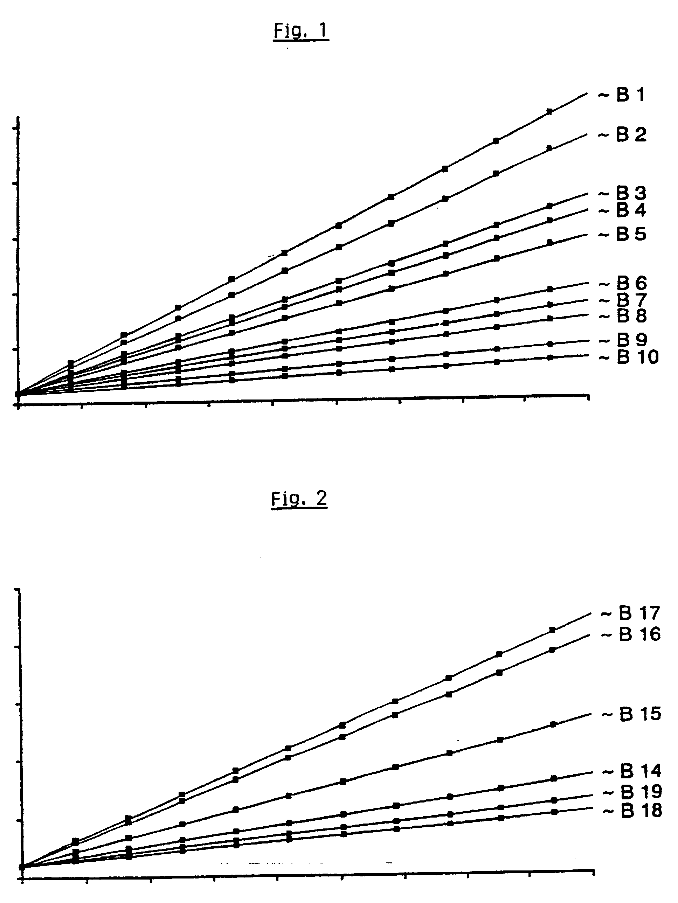

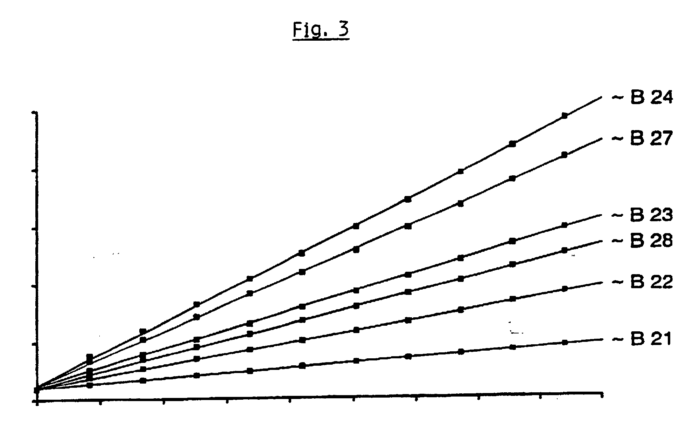

The measured photoelectric voltages, which are proportional to the corresponding luminescence intensities, are supplemented by a constant C that takes into account any possible background radiation, which may stem, for example, from reflections or scattering of the excitation light, or dark current effects. The constant C is calculated from the photoelectric voltages obtained at 0, 420 and 840 torr in accordance with the expanded Stern-Volmer equation (I₀-C)/(I-C)= 1 + K*[O₂]. All the measured photoelectric voltages are then corrected by that value for C and only then inserted into the relationship.
The results are shown in Figures 1 to 3. The Figures demonstrate impressively the high degree of linearity of the calibration curves, for which correlation coefficients in the range from r=0.9997 to r=0.99997 were obtained.
Figure 1 shows the calibration curves of sensors that have been coated with the coating compositions according to Examples B1 to B10. The oxygen partial pressure is plotted on the X axis in increments of 100 torr, and the corrected relationship of the luminescence intensity in the absence and presence of oxygen I₀-C/I-C is plotted on the Y axis in increments of 5.

Figure 2 shows the calibration curves of sensors coated with the coating compositions according to Examples B14 to B19.

Figure 3 shows the calibration curves of sensors coated with the coating compositions according to Examples B21 to B24 and B27 to B28.

| Measurement using a sensor and compositions according to Examples B1-B10: | | | | | | | | | | |
|---|---|---|---|---|---|---|---|---|---|---|
| O₂ (torr) | Phosphorescence intensity (mV) | | | | | | | | | |
| | B1 | B2 | B3 | B4 | B5 | B 6 | B7 | B8 | B9 | B10 |
| 0 | 962.9 | 817.3 | 919.3 | 909.3 | 716.6 | 174.6 | 185.4 | 182.0 | 113.5 | 124.4 |
| 84 | 269.9 | 249.5 | 332.0 | 345.6 | 298.7 | 97.0 | 111.8 | 117.8 | 87.5 | 104.7 |
| 168 | 166.7 | 158.5 | 218.4 | 227.3 | 199.4 | 73.3 | 86.5 | 93.1 | 74.8 | 94.3 |
| 252 | 123.2 | 118.4 | 165.6 | 171.3 | 151.2 | 60.8 | 72.5 | 78.7 | 66.5 | 87.0 |
| 336 | 98.5 | 95.3 | 133.9 | 138.0 | 122.7 | 52.6 | 63.4 | 69.3 | 60.7 | 81.2 |
| 420 | 83.5 | 80.6 | 113.8 | 116.2 | 103.3 | 47.0 | 57.2 | 62.4 | 56.4 | 76.6 |
| 504 | 72.8 | 70.1 | 98.9 | 100.5 | 89.5 | 43.2 | 52.5 | 57.4 | 52.8 | 72.8 |
| 588 | 64.4 | 62.4 | 88.4 | 89.1 | 79.4 | 40.1 | 49.0 | 53.6 | 50.1 | 69.6 |
| 672 | 58.3 | 56.3 | 79.4 | 79.8 | 71.1 | 37.5 | 46.2 | 50.1 | 47.8 | 67.1 |
| 756 | 53.2 | 51.6 | 72.5 | 72.5 | 64.6 | 35.4 | 43.8 | 47.5 | 45.9 | 64.5 |
| 840 | 49.2 | 47.6 | 67.0 | 66.4 | 59.1 | 33.8 | 41.7 | 45.2 | 44.2 | 62.4 |

| Measurement using a sensor and compositions according to Examples B14-B19 | | | | | | |
|---|---|---|---|---|---|---|
| O₂ (torr) | Phosphorescence intensity (mV) | | | | | |
| | B 14 | B 15 | B 16 | B 17 | B 18 | B 19 |
| 0 | 859.4 | 840.4 | 813.3 | 752.3 | 874.8 | 757.7 |
| 84 | 492.6 | 380.7 | 282.5 | 242.5 | 612.6 | 494.9 |
| 168 | 358.5 | 260.1 | 183.6 | 152.2 | 483.6 | 381.2 |
| 252 | 283.7 | 199.9 | 137.5 | 112.0 | 400.1 | 313.0 |
| 336 | 235.3 | 162.6 | 111.5 | 89.5 | 341.9 | 265.8 |
| 420 | 202.0 | 138.4 | 94.3 | 74.7 | 299.3 | 232.8 |
| 504 | 176.4 | 121.1 | 82.4 | 64.6 | 266.7 | 206.8 |
| 588 | 157.2 | 107.8 | 73.4 | 56.6 | 241.5 | 187.7 |
| 672 | 142.0 | 97.5 | 66.6 | 50.6 | 219.2 | 171.0 |
| 756 | 129.5 | 89.4 | 61.1 | 45.9 | 201.0 | 157.4 |
| 840 | 119.0 | 82.6 | 56.5 | 42.0 | 185.6 | 146.0 |

| Measurement using a sensor and compositions according to Examples B21-B24 and B27 and B28: | | | | | | |
|---|---|---|---|---|---|---|
| O₂ (torr) | Phosphorescence intensity (mV) | | | | | |
| | B 21 | B 22 | B 23 | B 24 | B 27 | B 28 |
| 0 | 515.9 | 577.3 | 861.6 | 704.6 | 904.2 | 754.0 |
| 84 | 382.6 | 323.2 | 362.0 | 207.7 | 283.0 | 339.0 |
| 168 | 311.2 | 241.9 | 255.1 | 140.6 | 187.0 | 238.1 |
| 252 | 263.4 | 197.7 | 202.4 | 110.3 | 141.2 | 187.7 |
| 336 | 229.4 | 170.8 | 170.9 | 93.0 | 115.3 | 156.9 |
| 420 | 203.6 | 151.1 | 149.6 | 81.7 | 98.5 | 136.1 |
| 504 | 184.1 | 136.9 | 134.6 | 73.4 | 86.6 | 121.1 |
| 588 | 168.2 | 125.9 | 123.1 | 67.2 | 77.2 | 109.1 |
| 672 | 155.0 | 117.0 | 114.0 | 62.5 | 70.0 | 100.1 |
| 756 | 143.7 | 109.9 | 106.8 | 58.8 | 64.2 | 92.6 |
| 840 | 134.1 | 104.0 | 101.0 | 55.7 | 59.6 | 86.5 |

### Example F2: Examples using platinum(II) tetracyclohexenoporphyrin (same apparatus as in Example F1)

The support is so arranged that the excitation radiation falls on the active layer at an oblique angle. The radiation source used is a green light-emitting diode with the interposition of a shortpass interference filter (KIF, Schott-Schleifer AG) that has a maximum transmission (λₘₐₓ) at a wavelength of 533.5 nm and 50% transmission (λ_{Kant}) at a wavelength of 566.5 nm. A 645 DF 20 band filter (G+P Electronic AG) is used as the emission filter. The phosphorescence radiation is measured using a photodiode having an amplification of 10¹¹. Moreover, the photoelectric voltage is reduced by means of a voltage distributor to such an extent that the photoelectric voltage obtained for an oxygen-free measurement sample is less than 1 volt.
There is used as measurement sample a sodium chloride-containing phosphate buffer [PBS, ionic strength 0.1 M (NaCl)] that has an oxygen partial pressure of 0,80 and 160 torr. The measurement samples and also the entire measuring apparatus are brought to a temperature of 37°C. The result is given in the following Tables.

| Measurement using a sensor and compositions according to Examples B12 and B25: | | |
|---|---|---|
| O₂ partial pressure (torr) | Phosphorescence intensity (mV) | |
| | B 12 | B 25 |
| 0 | 448.2 | 139.9 |
| 80 | 232.2 | 99.7 |
| 160 | 168.3 | 82.7 |

### Example F3: Measurements using platinum(II) tetraphenylporphyrin using a channel cell

The support is so arranged that the excitation radiation falls on the active layer at an oblique angle. The radiation source used is an orange light-emitting diode with the interposition of a shortpass interference filter (KIF, Schott-Schleifer AG) that has a maximum transmission (λₘₐₓ) at a wavelength of 487.0 nm and 50% transmission (λ_{Kant}) at a wavelength of 607.7 nm. An RG 9 longpass filter (Schott-Schleifer AG) is used as the emission filter. The phosphorescence radiation is measured using a photodiode having an amplification of 2*10¹⁰.
There is used as measurement sample a sodium chloride-containing phosphate buffer [PBS, ionic strength 0.1 M (NaCl)] that has an oxygen partial pressure of 0, 80 and 160 torr.
The result is given in the following Tables.

| Measurement using a sensor and compositions according to Example B11: | |
|---|---|
| O₂ partial pressure (torr) | Phosphorescence intensity (V) |
| 0 | 4.773 |
| 80 | 3.578 |
| 160 | 3.355 |

### Example F4: Measurements using platinum(II) tetraphenyttetrabenzoporphyrin using a channel cell (same apparatus as in Example F3).

| Measurement using a sensor and compositions according to Examples B13, B20 and B26: | | | |
|---|---|---|---|
| O₂ partial pressure (torr) | Phosphorescence intensity (V) | | |
| | B 13 | B 20 | B 26 |
| 0 | 1.417 | 1.821 | 3.103 |
| 80 | 0.771 | 1.219 | 2.505 |
| 160 | 0.614 | 0.982 | 2.256 |

## Claims

1. A composition of (a) an effective amount of a luminophore, (b) an oxygen-permeable and film-forming polymer and (c) a solvent for the components (a) and (b), wherein
(a1) the luminophore is selected from the group of platinum(II) porphyrins; and
(a2) the polymers are selected from the group:
(1) polystyrene-acrylonitriles having from 5 to 95 mol % structural units of acrylonitrile and from 95 to 5 mol % structural units of styrene; and
(2) a hydrophobic homopolymer of an acrylate, methacrylate, acrylamide or methacrylamide, or a hydrophobic copolymer based on a monomer from the group acrylate, methacrylate, acrylamide and methacrylamide, and an olefinic comonomer.

2. A composition according to claim 1, wherein the hydrophobic polyacrylamides and polymethacrylamides generally contain 1 or 2 hydrocarbon radicals on the nitrogen atom.

3. A composition according to claim 2, wherein the hydrocarbon radicals are alkyl groups.

4. A composition according to claim 3, wherein the alkyl groups contain from 1 to 20 carbon atoms.

5. A composition according to claim 1, wherein the copolymers (2) are copolymers comprising at least two monomers from the group acrylate, methacrylate, acrylamide and methacrylamide.

6. A composition according to claim 1, wherein the acrylates (2) and methacrylates (2) are those having a linear or branched C₁-C₂₀alkyl group in the ester group.

7. A composition according to claim 1, wherein the copolymers (2) contain at least 5 mol % of an olefinic comonomer.

8. A composition according to claim 1, wherein the comonomers are olefins, vinyl ethers, vinyl esters, vinyl acetals, vinyl chloride, vinylidene chloride, vinyl fluoride, acrylonitrile, methacrylonitrile and styrene.

9. A composition according to claim 1, wherein the copolymers of component (2) are selected from the group:
(a) a polymethacrylate or polyacrylate having from 95 to 70 mol % structural units of methyl methacrylate or methyl acrylate and from 5 to 30 mol % structural units of an acrylate or methacrylate having in the ester group an alkyl group that contains at least 3 carbon atoms;
(b) a terpolymer having from 40 to 60 mol % structural units of methyl methacrylate or methyl acrylate, from 5 to 30 mol % structural units of an acrylate or methacrylate having in the ester group an alkyl group that contains at least 6 carbon atoms, and at least to 10 mol % structural units of acrylonitrile wherein the total of the mol % is always 100 mol %, and
(c) a copolymer having from 30 to 45 mol % structural units of methyl methacrylate or methyl acrylate, from 20 to 5 mol % structural units of an acrylate or methacrylate having in the ester group an alkyl group that contains at least 6 carbon atoms, from 20 to 30 mol % structural units of acrylonitrile, and from 30 to 15 mol % structural units of vinyl acetate.

10. A composition according to claim 1, wherein the polystyrene-acrylonitriles (1) contain preferably from 15 to 85 mol % structural units of acrylonitrile, the remainder of the structural units being of styrene.

11. A composition according to claim 9, wherein the copolymers having structural units of an acrylate or methacrylate contain up to 18 carbon atoms in the alkyl group of the ester group, provided that it is not the methyl methacrylate or methyl acrylate itself.

12. A composition according to claim 9, wherein the polymethacrylates (a) or polyacrylates (a) contain preferably from 10 to 25 and especially from 10 to 20 mol % structural units of an acrylate or methacrylate having an alkyl group that contains at least 4 carbon atoms, the remainder of the structural units being of methyl methacrylate or methyl acrylate.

13. A composition according to claim 9, wherein the terpolymers (b) contain from 40 to 50 mol % structural units of methyl methacrylate or methyl acrylate, from 10 to 25 mol % structural units of an acrylate or methacrylate having in the ester group an alkyl group that contains at least 6 carbon atoms, and from 50 to 25 mol % structural units of acrylonitrile.

14. A composition according to claim 9, wherein the copolymer (c) contains from 35 to 45 mol % structural units of methyl methacrylate, from 5 to 15 mol % structural units of an acrylate having in the ester group an alkyl group that contains at least 4 carbon atoms, from 30 to 20 mol % structural units of acrylonitrile, and from 30 to 20 mol % structural units of vinyl acetate.

15. A composition according to claim 1, wherein the molecular weight of the polymers is from 10 000 to 5 000 000.

16. A composition according to claim 1, wherein the platinum porphyrin is an unsubstituted or substituted platinum(II) porphyrin or an unsubstituted or substituted platinum(II) benzoporphyrin.

17. A composition according to claim 1, wherein the platinum porphyrin corresponds to formula I. 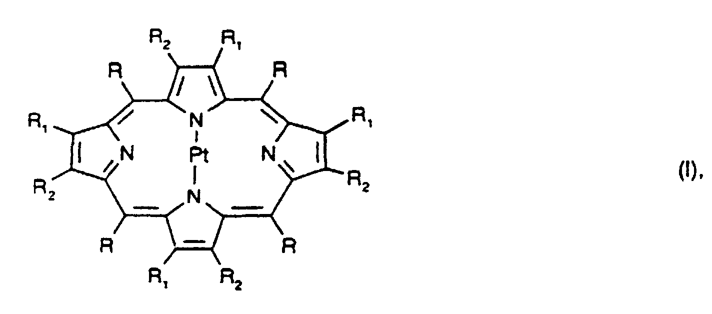 wherein
R is H or C₁-C₁₈alkyl, or C₃-C₈cycloalkyl, phenyl, pyridyl or phenyl-C₁-C₄alkylene, each of which is unsubstituted or substituted by C₁-C₁₈alkyl, C₁-C₁₈alkoxy, R₃-O-C(O)-, halogen, -CN or by -NO₂;
R₁ and R₂ are each independently of the other H, C₁-C₁₂alkyl or C₁-C₁₂alkoxy, or R₁ and R₂ together form -CH₂CHR₄CHR₅CH₂-, -OCH₂O-, -OCH₂CH₂O- or -CH=CH-CH=CH-;
R₃ is C₁-C₁₈alkyl, C₃-C₈cycloalkyl, phenyl, benzyl, C₁-C₁₂alkylphenyl or C₁-C₁₂alkylbenzyl; and
R₄ and R₅ are each independently of the other H, C₁-C₁₂alkyl or C₁-C₁₂alkoxy;
with the proviso that when R₁ and R₂ together form -CH₂CHR₄CHR₅CH₂-, R is not substituted or unsubstituted phenyl or pyridyl.

18. A composition according to claim 17, wherein the compound of formula I is a compound wherein R is H, phenyl or C₁-C₄alkylphenyl, and each of R₁ and R₂ is H, C₁-C₈alkyl or -CH=CH-CH=CH-.

19. A composition according to claim 17, wherein the compound of formula I is a compound wherein R is H or C₁-C₈alkyl, and R₁ and R₂ together form -CH₂CHR₄CHR₅CH₂-, each of R₄ and R₅ being H or C₁-C₄alkyl.

20. A composition according to claim 17, wherein the compound of formula I⁻ is platinum(II) tetrabenzoporphyrin, platinum(II) tetraphenyltetrabenzoporphyrin, platinum(II) octaethylporphyrin or platinum(II) cyclohexenoporphyrin.

21. A composition according to claim 1 that comprises as solvent ethers, N-dialkylated acid amides or N-alkylated lactams, sulfones and sulfoxides, esters and lactones, nitriles, hydrocarbons, halogenated hydrocarbons or ketones.

22. A composition according to claim 17, wherein the amount of compound of formula I is from 0.01 to 20 % by weight, based on the amount of components a) and b).

23. A composition comprising
a) a solid support material to which there is applied an active solvent-free layer of
b) a composition according to claim 1.

24. A composition according to claim 23, wherein the support material is a transparent, translucent or opaque material.

25. A composition according to claim 23, wherein the support material is an inorganic glass or plastics material.

26. A composition according to claim 23, wherein the layer thickness of the composition comprising polymer and platinum (II) porphyrins is from 0.5 to 1000 µm.

27. A method of determining oxygen in an analyte, in which an oxygen-sensitive layer of an optical sensor, which layer contains a luminescence indicator and an oxygen-permeable polymer, is irradiated with light and luminescence radiation is produced, then the analyte is brought into contact with the layer and the reduction in the intensity of the luminescence radiation in dependence upon the oxygen content is detected, wherein the oxygen-sensitive layer comprises:
(a1) a luminophore selected from the group of platinum(II) porphyrins; which is uniformly distributed in:
(a2) a copolymer selected from the group;
(1) polystyrene-acrylonitriles having from 5 to 95 mol % structural units of acrylonitrile and from 95 to 5 mol % structural units of styrene; and
(2) a hydrophobic homopolymer of an acrylate, methacrylate, acrylamide or methacrylamide, or a hydrophobic copolymer based on a monomer from the group acrylate, methacrylate, acrylamide and methacrylamide, and an olefinic comonomer.

28. The use of a composition comprising (a) an effective amount of a luminophore selected from the group of platinum(II) porphyrins; and (b) an oxygen-permeable and film-forming copolymer selected from the group:
(1) polystyrene-acrylonitriles having from 5 to 95 mol % structural units of acrylonitrile and from 95 to 5 mol % structural units of styrene; and
(2) a hydrophobic homopolymer of an acrylate, methacrylate, acrylamide or methacrylamide, or a hydrophobic copolymer based on a monomer from the group acrylate, methacrylate, acrylamide and methacrylamide, and an olefinic comonomer;
as the active layer of a sensor optrode for the luminescence-optical determination of oxygen.

## Patentansprüche

1. Zusammensetzung aus (a) einer wirksamen Menge eines Luminophors, (b) einem sauerstoffdurchlässigen und filmbildenden Polymer, und (c) einem Lösungsmittel für die Komponenten (a) und (b), die **dadurch gekennzeichnet ist, dass**
(a1) der Luminophor ausgewählt ist aus der Gruppe der Platin(II)porphyrine; und
(a2) die Polymere ausgewählt sind aus der Gruppe:
(1) Polystyrolacrylnitrile mit 5 bis 95 Mol-% Strukturelementen aus Acrylnitril und 95 bis 5 Mol-% Strukturelementen aus Styrol; und
(2) einem hydrophoben Homopolymer aus einem Acrylat, Methacrylat, Acrylamid oder Methacrylamid, oder einem hydrophoben Copolymer auf Basis von einem Monomer aus der Gruppe Acrylat, Methacrylat, Acrylamid und Methacrylamid und einem olefinischen Comonomer.

2. Zusammensetzung gemäss Anspruch 1, **dadurch gekennzeichnet, dass** die hydrophoben Polyacrylamide und Polymethacrylamide im allgemeinen 1 oder 2 Kohlenwasserstoffreste am N-Atom enthalten.

3. Zusammensetzung gemäss Anspruch 2, **dadurch gekennzeichnet, dass** die Kohlenwasserstoffreste Alkylgruppen sind.

4. Zusammensetzung gemäss Anspruch 3, **dadurch gekennzeichnet, dass** die Alkylgruppen 1 bis 20 C-Atome enthalten.

5. Zusammensetzung gemäss Anspruch 1, **dadurch gekennzeichnet, dass** es sich bei den Copolymeren (2) um solche mit wenigstens zwei Monomeren aus der Gruppe Acrylat, Methacrylat, Acrylamid oder Methacrylamid handelt.

6. Zusammensetzung gemäss Anspruch 1, **dadurch gekennzeichnet, dass** es sich dei den Acrylaten (2) und Methacrylaten (2) um solche mit einer linearen oder verzweigten C₁-C₂₀-Alkylgruppe in der Estergruppe handelt.

7. Zusammensetzung gemäss Anspruch 1, **dadurch gekennzeichnet, dass** die Copolymeren (2) mindestens 5 Mol-% eines olefinischen Comonomeren enthalten.

8. Zusammensetzung gemäss Anspruch 1, **dadurch gekennzeichnet, dass** es sich bei den Comonomeren um Olefine, Vinylether, Vinylester, Vinylacetale, Vinylchlorid, Vinylidenchlorid, Vinylfluorid, Acrylnitril, Methacrylnitril und Styrol handelt.

9. Zusammensetzung gemäss Anspruch 1, **dadurch gekennzeichnet, dass** es sich bei den Coplymeren der Komponente 2 um solche ausgewählt aus der Gruppe:
(a) einem Polymethacrylat bzw. Polyacrylat mit 95 bis 70 Mol-% Strukturelementen aus Methylmethacrylat bzw. Methylacrylat und 5 bis 30 Mol-% Strukturelementen aus einem Acrylat bzw. Methacrylat mit einer mindestens 3 C-Atome enthaltenden Alkylgruppe in der Estergruppe;
(b) einem Terpolymer mit 40 bis 60 Mol-% Strukturelementen aus Methylmethacrylat oder Methylacrylat, 5 bis 30 Mol-% Strukturelementen aus einem Acrylat bzw. Methacrylat mit einer mindestens 6 C-Atome enthaltenden Alkylgruppe in der Estergruppe, und mindestens 10 Mol-% Strukturelementen aus Acrylnitril, wobei sich die Mol-% immer zu 100 Mol-% ergänzen; und
(c) einem Copolymer mit 30 bis 45 Mol-% Strukturelementen aus Methylmethacrylat bzw. Methylacrylat, 20 bis 5 Mol-% Strukturelementen aus einem Acrylat bzw. Methacrylat mit einer mindestens 6 C-Atome enthaltenden Alkylgruppe in der Estergruppe, 20 bis 30 Mol-% Strukturelementen aus Acrylnitril, und 30 bis 15 Mol-% Strukturelementen aus Vinylacetat.

10. Zusammensetzung gemäss Anspruch 1, **dadurch gekennzeichnet, dass** die Polystyrolacrylnitrile (1) bevorzugt 15 bis 85 Mol-% Strukturelemente aus Acrylnitril, und den Rest Strukturelemente des Styrols enthalten.

11. Zusammensetzung gemäss Anspruch 9, **dadurch gekennzeichnet, dass** die Copolymeren mit Strukturelementen aus einem Acrylat oder Methacrylat bis zu 18 C-Atome in der Alkylgruppe der Estergruppe entahlten, sofern es sich nicht um das Methylmethacrylat oder Methylacrylat selbst handelt, bis 18 C-Atome.

12. Zusammensetzung gemäss Anspruch 9, **dadurch gekennzeichnet, dass** die Polymethacrylate (a) bzw. Polyacrylate (a) bevorzugt 10 bis 25 und besonders bevorzugt 10 bis 20 Mol.-% Strukturelemente eines Acrylates bzw. Methacrylates mit einer mindestens 4 C-Atome enthaltenden Alkylgruppe, und den Rest Strukturelemente des Methylmethacrylates bzw. Methylacrylates enthalten.

13. Zusammensetzung gemäss Anspruch 9, **dadurch gekennzeichnet, dass** die Terpolymeren (b) 40 bis 50 Mol-% Strukturelemente aus Methylmethacrylat oder Methylacrylat, 10 bis 25 Mol-% Strukturelementen aus einem Acrylat oder Methacrylat mit einer mindestens 6 C-Atome enthaltenden Alkylgruppe in der Estergruppe, und 50 bis 25 Mol-% Strukturelemente aus Acrylnitril enthalten.

14. Zusammensetzung gemäss Anspruch 9, **dadurch gekennzeichnet, dass** das Copolymer (c) 35 bis 45 Mol-% Strukturelemente aus Methylmethacrylat, 5 bis 15 Mol-% Strukturelemente aus einem Acrylat mit einer mindestens 4 C-Atome enthaltenden Alkylgruppe in der Estergruppe, 30 bis 20 Mol-% Strukturelemente aus Acrylnitril, und 30 bis 20 Mol-% Strukturelemente aus Vinylacetat enthält.

15. Zusammensetzung gemäss Anspruch 1, **dadurch gekennzeichnet, dass** das Molekulargewicht der Polymeren 10 000 bis 5 000 000 beträgt.

16. Zusammensetzung gemäss Anspruch 1, **dadurch gekennzeichnet, dass** es sich bei den Platinporphyrinen um unsubstituierte oder substituierte Pt(II)-Porphyrine oder um unsubstituierte oder substituierte Pt(II)-Benzoporphyrine handelt.

17. Zusammensetzung gemäss Anspruch 1, **dadurch gekennzeichnet, dass** die Platinporphyrine der Formel I entsprechen, 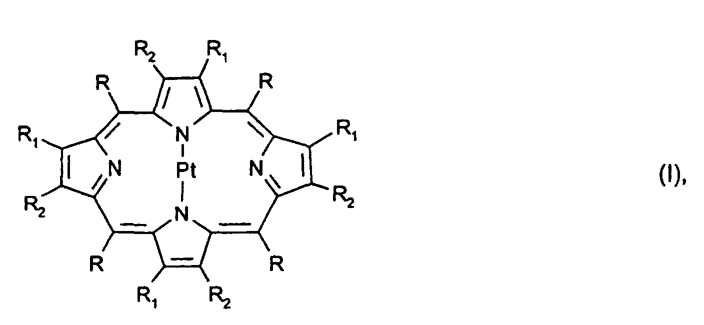 worin
R für H oder C₁-C₁₈-Alkyl steht, oder unsubstituiertes oder mit C₁-C₁₈-Alkyl, C₁-C₁₈-Alkoxy, R₃-O-C(O)-, Halogen, -CN oder -NO₂ substituiertes C₃-C₈-Cycloalkyl, Phenyl, Pyrridyl oder Phenyl-C₁-C₄-Alkylen bedeutet;
R₁ und R₂ unabhängig voneinander H, C₁-C₁₂-Alkyl oder C₁-C₁₂-Alkoxy bedeuten, oder R₁ und R₂ zusammen -CH₂CHR₄CHR₅CH₂-, -OCH₂O-, -OCH₂CH₂O- oder -CH=CH-CH=CHdarstellen;
R₃ C₁-C₁₈-Alkyl, C₃-C₈-Cycloalkyl, Phenyl, Benzyl, C₁-C₁₂-Alkylphenyl oder C₁-C₁₂-Alkylbenzyl bedeutet; und
R₄ und R₅ unabhängig voneinander H, C₁-C₁₂-Alkyl oder C₁-C₁₂-Alkoxy bedeuten;
mit der Massgabe, dass R nicht für substituiertes oder unsubstituiertes Phenyl oder Pyrridyl steht, wenn R₁ und R₂ zusammen -CH₂CHR₄CHR₅CH₂- bedeuten.

18. Zusammensetzung gemäss Anspruch 17, **dadurch gekennzeichnet, dass** es sich bei den Verbindungen der Formel I um solche handelt, worin R H, Phenyl oder C₁-C₄-Alkylphenyl darstellt, und R₁ und R₂ je H, C₁-C₈-Alkyl oder -CH=CH-CH=CH- bedeuten.

19. Zusammensetzung gemäss Anspruch 17, **dadurch gekennzeichnet, dass** es sich bei den Verbindungen der Formel I um solche handelt, worin R H oder C₁-C₈-Alkyl bedeuten, und R₁ und R₂ zusammen -CH₂CHR₄CHR₅CH₂- darstellen, wobei R₄ und R₅ je H oder C₁-C₄-Alkyl sind.

20. Zusammensetzung gemäss Anspruch 17, **dadurch gekennzeichnet, dass** es sich bei den Verbindungen der Formel I um Pt(II)-Tetrabenzoporphyrin, Pt(II)-Tetraphenyltetrabenzoporphyrin, Pt(II)-Octaethylporphyrin und Pt(II)-Cyclohexenoporphyrin handelt.

21. Zusammensetzung gemäss Anspruch 1, **dadurch gekennzeichnet, dass** sie als Lösungsmittel Ether, N-dialkylierte Säureamide oder N-alkylierte Lactame, Sulfone und Sulfoxide, Ester und Lactone, Nitrile, Kohlenwasserstoffe, Halogenkohlenwasserstoffe, oder Ketone enthält

22. Zusammensetzung gemäss Anspruch 17, **dadurch gekennzeichnet, dass** die Menge an Verbindung der Formel I 0,01 bis 20 Gew-% beträgt, bezogen auf die Menge der Komponenten a) und b).

23. Zusammensetzung aus
a) einem festen Trägermaterial, auf dem eine aktive lösungsmittelfreie Schicht aus
b) der Zusammensetzung gemäss Anspruch 1 aufgebracht ist.

24. Zusammensetzung gemäss Anspruch 23, **dadurch gekennzeichnet, dass** es sich bei den Trägermaterialien um transparente, transluszente oder opake Materialien handelt.

25. Zusammensetzung gemäss Anspruch 23, **dadurch gekennzeichnet, dass** die Trägermaterialien anorganische Gläser oder Kunststoffe sind.

26. Zusammensetzung gemäss Anspruch 23, **dadurch gekennzeichnet, dass** die Schichtdicke der Zusammensetzung aus Polymer und platinum(II) porphyrins 0,5 bis 1000 µm beträgt.

27. Verfahren zur Bestimmung von Sauerstoff in einem Analyten, bei dem man eine sauerstoffempfindlichen Schicht eines optischen Sensors, die einem Lumineszenzindikator und ein Sauerstoff durchlässiges Polymer enthält, mit Licht bestrahlt und eine Lumineszensstrahlung erzeugt, dann den Analyten mit der Schicht in Kontakt bringt, und die Erniedrigung der Intensität der Lumineszensstrahlung in Abhängigkeit vom Sauerstoffgehalt detektiert, das **dadurch gekennzeichnet ist, dass** die sauerstoffempfindliche Schicht
(a1) einen Luminophor ausgewählt aus der Gruppe der Platin(II)porphyrine enthält; der
(a2) in einem Copolymer ausgewählt sind aus der Gruppe:
(1) Polystyrolacrylnitrile mit 5 bis 95 Mol-% Strukturelementen aus Acrylnitril und 95 bis 5 Mol-% Strukturelementen aus Styrol; und
(2) einem hydrophoben Homopolymer aus einem Acrylat, Methacrylat, Acrylamid oder Methacrylamid, oder einem hydrophoben Copolymer auf Basis von einem Monomer aus der Gruppe Acrylat, Methacrylat, Acrylamid und Methacrylamid und einem olefinischen Comonomer;
gleichmässig verteilt ist.

28. Verwendung einer Zusammensetzung aus (a) einer wirksamen Menge eines Luminophors, der ausgewählt ist aus der Gruppe der Platin(II)porphyrine; und (b) einem sauerstoffdurchlässigen und filmbildenden Copolymer, das ausgewählt ist aus der Gruppe:
(1) Polystyrolacrylnitrile mit 5 bis 95 Mol-% Strukturelementen aus Acrylnitril und 95 bis 5 Mol-% Strukturelementen aus Styrol; und
(2) einem hydrophoben Homopolymer aus einem Acrylat, Methacrylat, Acrylamid oder Methacrylamid, oder einem hydrophoben Copolymer auf Basis von einem Monomer aus der Gruppe Acrylat, Methacrylat, Acrylamid und Methacrylamid und einem olefinischen Comonomer;
als aktive Schicht eines Optroden-Sensors für die lumineszenz-optische Bestimmung von Sauerstoff.

## Revendications

1. Composition de (a) une quantité efficace d'un luminophore, (b) un polymère filmogène et perméable à l'oxygène et (c) un solvant pour les composants (a) et (b), dans laquelle
(a1) le luminophore est choisi dans la classe des porphyrines de platine(II) ; et
(a2) les polymères sont choisis dans la classe formée par :
(1) les polystyrène-acrylonitriles ayant 5 à 95 mol % de motifs structuraux d'acrylonitrile et 95 à 5 mol % de motifs structuraux de styrène ; et
(2) un homopolymère hydrophobe d'un acrylate, méthacrylate, acrylamide ou méthacrylamide, ou un copolymère hydrophobe à base d'un monomère de la classe des acrylates, méthacrylates, acrylamide et méthacrylamide, et d'un comonomère oléfinique.

2. Composition selon la revendication 1, dans laquelle les polyacrylamides et polyméthacrylamides hydrophobes contiennent généralement 1 ou 2 radicaux hydrocarbonés sur l'atome d'azote.

3. Composition selon la revendication 2, dans laquelle les radicaux hydrocarbonés sont des groupes alkyle.

4. Composition selon la revendication 3, dans laquelle les groupes alkyle contiennent 1 à 20 atomes de carbone.

5. Composition selon la revendication 1, dans laquelle les copolymères (2) sont des copolymères comprenant au moins deux monomères de la classe des acrylates, méthacrylates, acrylamide et méthacrylamide.

6. Composition selon la revendication 1, dans laquelle les acrylates (2) et les méthacrylates (2) sont ceux ayant un groupe alkyle en C₁-C₂₀ linéaire ou ramifié dans le groupe ester.

7. Composition selon la revendication 1, dans laquelle les copolymères (2) contiennent au moins 5 mol % d'un comonomère oléfinique.

8. Composition selon la revendication 1, dans laquelle les comonomères sont des oléfines, des éthers de vinyle, des esters de vinyle, des acétals vinyliques, le chlorure de vinyle, le chlorure de vinylidène, le fluorure de vinyle, l'acrylonitrile, le méthacrylonitrile et le styrène.

9. Composition selon la revendication 1, dans laquelle les copolymères du composant (2) sont choisis dans la classe formée par :
(a) un polyméthacrylate ou polyacrylate ayant 95 à 70 mol % de motifs structuraux de méthacrylate de méthyle ou d'acrylate de méthyle et 5 à 30 mol % de motifs structuraux d'un acrylate ou méthacrylate ayant, dans le groupe ester, un groupe alkyle contenant au moins 3 atomes de carbone ;
(b) un terpolymère ayant 40 à 60 mol % de motifs structuraux de méthacrylate de méthyle ou d'acrylate de méthyle, 5 à 30 mol % de motifs structuraux d'un acrylate ou méthacrylate ayant, dans le groupe ester, un groupe alkyle contenant au moins 6 atomes de carbone, et au moins 10 mol % de motifs structuraux d'acrylonitrile, le total des mol % était toujours de 100 mol % ; et
(c) un copolymère ayant 30 à 45 mol % de motifs structuraux de méthacrylate de méthyle ou d'acrylate de méthyle, 20 à 5 mol % de motifs structuraux d'un acrylate ou méthacrylate ayant, dans le groupe ester, un groupe alkyle contenant au moins 6 atomes de carbone, 20 à 30 mol % de motifs structuraux d'acrylonitrile, et 30 à 15 mol % de motifs structuraux d'acétate de vinyle.

10. Composition selon la revendication 1, dans laquelle les polystyrène-acrylonitriles (1) contiennent de préférence 15 à 85 mol % de motifs structuraux d'acrylonitrile, le reste des motifs structuraux étant des motifs de styrène.

11. Composition selon la revendication 9, dans laquelle les copolymères ayant des motifs structuraux d'un acrylate ou méthacrylate contiennent jusqu'à 18 atomes de carbone dans le groupe alkyle du groupe ester, à condition qu'il ne s'agisse pas du méthacrylate de méthyle ou de l'acrylate de méthyle soi-même.

12. Composition selon la revendication 9, dans laquelle les polyméthacrylates (a) ou polyacrylates (a) contiennent de préférence 10 à 25 et notamment 10 à 20 mol % de motifs structuraux d'un acrylate ou méthacrylate ayant un groupe alkyle contenant au moins 4 atomes de carbone, le reste des motifs structuraux étant des motifs de méthacrylate de méthyle ou d'acrylate de méthyle.

13. Composition selon la revendication 9, dans laquelle les terpolymères (b) contiennent 40 à 50 mol % de motifs structuraux de méthacrylate de méthyle ou d'acrylate de méthyle, 10 à 25 mol % de motifs structuraux d'un acrylate ou méthacrylate ayant, dans le groupe ester, un groupe alkyle contenant au moins 6 atomes de carbone, et 50 à 25 mol % de motifs structuraux d'acrylonitrile.

14. Composition selon la revendication 9, dans laquelle le copolymère (c) contient 35 à 45 mol % de motifs structuraux de méthacrylate de méthyle, 5 à 15 mol % de motifs structuraux d'un acrylate ayant, dans le groupe ester, un groupe alkyle contenant au moins 4 atomes de carbone, 30 à 20 mol % de motifs structuraux d'acrylonitrile, et 30 à 20 mol % de motifs structuraux d'acétate de vinyle.

15. Composition selon la revendication 1, dans laquelle le poids moléculaire des polymères est de 10 000 à 5 000 000.

16. Composition selon la revendication 1, dans laquelle la porphyrine de platine est une porphyrine de platine(II) substituée ou non substituée ou une benzoporphyrine de platine(II) substituée ou non substituée.

17. Composition selon la revendication 1, dans laquelle la porphyrine de platine correspond à la formule I, 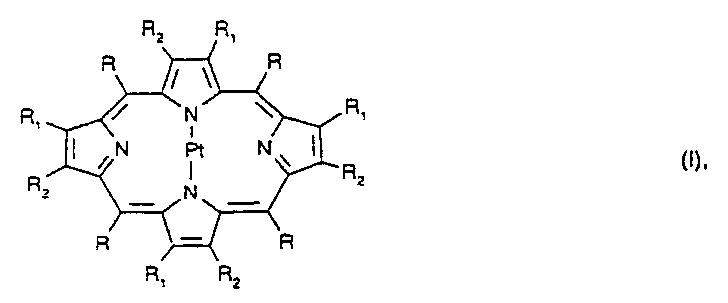 dans laquelle
R est H ou un groupe alkyle en C₁-C₁₈ ou cycloalkyle en C₃-C₈, phényle, pyridyle ou phényl(alkylène en C₁-C₄), dont chacun n'est pas substitué ou est substitué par au moins un groupe alkyle en C₁-C₁₈, alcoxy en C₁-C₁₈, R₃-O-C(O)-, halogéno, -CN ou -NO₂ ;
R₁ et R₂ sont chacun, indépendamment de l'autre, H, un groupe alkyle en C₁-C₁₂ ou alcoxy en C₁-C₁₂, ou bien R₁ et R₂ forment ensemble -CH₂CHR₄CHR₅CH₂-, -OCH₂O-, -OCH₂CH₂O- ou -CH=CH-CH=CH- ;
R₃ est un groupe alkyle en C₁-C₁₈, cycloalkyle en C₃-C₈, phényle, benzyle, (alkyle en C₁-C₁₂)phényle ou (alkyle en C₁-C₁₂)benzyle ; et
R₄ et R₅ sont chacun, indépendamment de l'autre, H, un groupe alkyle en C₁-C₁₂ ou alcoxy en C₁-C₁₂ ;
à condition que lorsque R₁ et R₂ forment ensemble -CH₂CHR₄CHR₅CH₂-, R ne soit pas un groupe phényle ou pyridyle substitué ou non substitué.

18. Composition selon la revendication 17, dans laquelle le composé de formule I est un composé dans lequel R est H, un groupe phényle ou (alkyle en C₁-C₄)phényle, et chacun de R₁ et R₂ est H, un groupe alkyle en C₁-C₈ ou -CH=CH-CH=CH-.

19. Composition selon la revendication 17, dans laquelle le composé de formule I est un composé dans lequel R est H ou un groupe alkyle en C₁-C₈, et R₁ et R₂ forment ensemble -CH₂CHR₄CHR₅CH₂-, chacun de R₄ et R₅ étant H ou un groupe alkyle en C₁-C₄.

20. Composition selon la revendication 17, dans laquelle le composé de formule I est la tétrabenzoporphyrine de platine(II), la tétraphényltétrabenzoporphyrine de platine(II), l'octaéthylporphyrine de platine(II) ou la cyclohexénoporphyrine de platine(II).

21. Composition selon la revendication 1, qui comprend, comme solvant, des éthers, amides d'acide N-dialkylés ou lactames N-alkylés, sulfones et sulfoxydes, esters et lactones, nitriles, hydrocarbures, hydrocarbures halogénés ou cétones.

22. Composition selon la revendication 17, dans laquelle la quantité de composé de formule I est de 0,01 à 20 % en poids, par rapport à la quantité des composants a) et b).

23. Composition comprenant
a) un matériau de support solide auquel est appliquée une couche active sans solvant de
b) une composition selon la revendication 1.

24. Composition selon la revendication 23, dans laquelle le matériau de support est un matériau transparent, translucide ou opaque.

25. Composition selon la revendication 23, dans laquelle le matériau de support est un verre minéral ou une matière plastique.

26. Composition selon la revendication 23, dans laquelle l'épaisseur de couche de la composition comprenant le polymère et les porphyrines de platine(II) est de 0,5 à 1000 µm.

27. Procédé pour déterminer l'oxygène dans un analyte, dans lequel une couche sensible à l'oxygène d'un capteur optique, laquelle couche contient un indicateur à luminescence et un polymère perméable à l'oxygène, est irradiée avec de la lumière et un rayonnement de luminescence est produit, puis l'analyte est mis en contact avec la couche et la réduction d'intensité du rayonnement de luminescence dépendant de la teneur en oxygène est détectée, dans lequel la couche sensible à l'oxygène comprend :
(a1) un luminophore choisi dans la classe des porphyrines de platine(II) ; qui est uniformément réparti dans :
(a2) un copolymère choisi dans la classe formée par :
(1) les polystyrène-acrylonitriles ayant 5 à 95 mol % de motifs structuraux d'acrylonitrile et 95 à 5 mol % de motifs structuraux de styrène ; et
(2) un homopolymère hydrophobe d'un acrylate, méthacrylate, acrylamide ou méthacrylamide, ou un copolymère hydrophobe à base d'un monomère de la classe des acrylates, méthacrylates, acrylamide et méthacrylamide, et d'un comonomère oléfinique.

28. Utilisation d'une composition comprenant (a) une quantité efficace d'un luminophore choisi dans la classe des porphyrines de platine(II) ; et (b) un copolymère filmogène et perméable à l'oxygène choisi dans la classe formée par :
(1) les polystyrène-acrylonitriles ayant 5 à 95 mol % de motifs structuraux d'acrylonitrile et 95 à 5 mol % de motifs structuraux de styrène ; et
(2) un homopolymère hydrophobe d'un acrylate, méthacrylate, acrylamide ou méthacrylamide, ou un copolymère hydrophobe à base d'un monomère de la classe des acrylates, méthacrylates, acrylamide et méthacrylamide, et d'un comonomère oléfinique ;
comme couche active d'un capteur de type optrode pour la détermination optique par luminescence de l'oxygène.
